# FASCICULE DE BREVET EUROPEEN

(11) **EP 2 611 562 B1**
(45) Date de publication et mention de la délivrance du brevet: **28.10.2020**
(21) Numéro de dépôt: 11773026.7
(22) Date de dépôt: 02.09.2011
(51) Int. Cl.: B23H 3/00, B23H 9/02

(54) **ÉLECTRODE ET INSTALLATION DE CASSAGE D'ANGLE SUR UNE PIECE METALLIQUE**
ELEKTRODE UND ANLAGE ZUR ABSCHRÄGUNG DER KANTEN EINES WERKSTÜCKS AUS METALL
ELECTRODE AND FACILITY FOR CHAMFERING THE CORNERS OF A METAL WORKPIECE

(30) Priorité: 02.09.2010 FR 1056981
(43) Date de publication de la demande: 10.07.2013
(73) Titulaire: Safran Aircraft Engines, 75015 Paris (FR)
(72) Inventeur: BATISTA, Nicolas, 77550 Moissy Cramayel Cedex (FR); HEBUTERNE, Damien, 77550 Moissy Cramayel Cedex (FR); TEXIER, Anthony, 77550 Moissy Cramayel Cedex (FR)
(74) Mandataire: Ernest Gutmann - Yves Plasseraud S.A.S.
(86) Numéro de dépôt international: PCT/FR2011/052018
(87) Numéro de publication internationale: WO 2012/028830

(56) Documents cités:
- FR-A1- 2 771 036
- GB-A- 1 255 930
- JP-A- 62 113 005
- JP-A- 2000 343 334
- JP-A- 2002 036 032
- JP-A- 2010 125 541
- US-A- 3 803 014

## Description

La présente invention concerne une électrode et une installation pour le cassage d'angle sur une pièce métallique, telle que par exemple une pièce utilisée en aéronautique. US3803014A décrit une telle électrode.

De nombreuses pièces industrielles comportent des arêtes vives, par exemple un disque de rotor de compresseur ou de turbine de turbomachine qui comprend une pluralité d'alvéoles répartis sur sa circonférence externe pour le montage des pieds d'aubes et dont les fonds forment avec les faces amont et aval du disque une pluralité d'arêtes. On trouve aussi, par exemple, des arêtes au niveau des brides d'assemblage entre disques sur les bords des trous de fixation et les bords des festons de ces brides.

Ces arêtes comportent souvent des bavures qui sont la conséquence de la réalisation de formes particulières (rainures, orifices, découpes, ...) dans la pièce. L'élimination de ces bavures peut être réalisée par exemple par cassage d'angle mécanique.

A cette fin, il est connu de réaliser un chanfrein sur l'arête qui est formée à la jonction de deux surfaces. Il est également connu de réaliser entre les deux surfaces une zone de raccordement à section convexe. Cette opération de cassage d'angle permet d'éviter tout risque de blessure lors de la manipulation de la pièce et permet de supprimer les bavures.

A l'heure actuelle, la majorité des opérations de cassage d'angle sont réalisées manuellement par fraisage, meulage, brossage ou par l'utilisation de bandes abrasives. Ces opérations requièrent non seulement un temps long mais s'avèrent également délicates à réaliser puisque l'usinage manuel peut engendrer la formation de défauts sur la zone usinée, tels que par exemple des rayures. De plus, des dommages collatéraux tels que des coups d'outils ou bien des échauffements localisés peuvent être constatés sur la pièce. Il est ainsi difficile d'obtenir un cassage d'angle régulier et uniforme sur toute l'arête à usiner. Enfin, du fait que les opérations de cassage d'angle sont réalisées manuellement et par des opérateurs différents, il est impossible de garantir une bonne répétabilité de l'usinage.

Un autre inconvénient réside dans le contrôle du cassage d'angle. Cette étape de contrôle est généralement réalisée par application d'une pâte durcissable sur la zone usinée de manière à obtenir une empreinte que l'on soumet à un éclairage puis à un grossissement au moyen d'une loupe de manière à obtenir par projection le profil inversé agrandi de la zone usinée. Cela requiert non seulement un temps long mais s'avère également peu fiable puisque le contrôle est dépendant de l'orientation de l'éclairage et de la position de l'empreinte durcie par rapport à la loupe grossissante ainsi que de la qualité de la prise d'empreinte.

L'invention propose une solution simple, efficace et économique à l'ensemble de ces problèmes de la technique antérieure.

A cette fin, le présent document propose une électrode pour le cassage d'angle d'une pièce métallique par usinage électrochimique, comprenant au moins une zone conductrice destinée à être agencée en regard d'un angle à casser de la pièce, caractérisée en ce que la zone conductrice a une forme complémentaire de celle du cassage d'angle à réaliser et est agencée entre une première partie formant une surépaisseur isolante et une seconde partie isolante de positionnement de la zone conductrice en regard de l'angle à casser.

La forme de la zone conductrice de l'électrode complémentaire de celle du cassage d'angle à réaliser permet, lorsque par exemple la zone conductrice a une forme incurvée concave particulière, d'obtenir un cassage d'angle avec une forme incurvée convexe correspondante.

L'agencement de l'électrode entre deux parties isolantes permet de limiter l'usinage électrochimique à la zone de l'angle à casser. De cette manière, les zones de la pièce métallique qui ne sont pas situées en regard de la zone conductrice ne subissent pas d'usinage électrochimique du fait de la présence des première et seconde parties en matériau isolant.

Enfin, la seconde partie isolante permet un positionnement optimal de l'électrode au voisinage de la zone à usiner.

Selon une autre caractéristique de l'invention, la zone conductrice de l'électrode a une section incurvée concave.

Selon encore une autre caractéristique de l'invention, la première partie isolante à une forme annulaire.

Dans une première réalisation possible de l'invention, la zone conductrice de l'électrode a une forme annulaire incurvée concave et s'étend entre la surépaisseur isolante et la seconde partie isolante ayant une forme cylindrique.

Ce type d'électrode est particulièrement bien adapté à l'usinage de l'arête formée au débouché d'un orifice, la seconde partie isolante cylindrique est destinée à venir s'insérer dans l'orifice de manière à réaliser un centrage de l'électrode par rapport à l'orifice pour assurer un bon positionnement de la zone conductrice annulaire en regard de l'arête à casser.

Dans une autre réalisation, l'électrode comprend deux zones incurvées concaves s'étendant de manière rectiligne et parallèlement l'une à l'autre, les concavités des zones incurvées étant orientées selon une même direction et dans des sens opposés.

Ce type d'électrode est particulièrement bien adapté à l'usinage des arêtes rectilignes formées au débouché d'une rainure telle que par exemple une rainure ou alvéole formée à la périphérie d'un disque dans une turbomachine.

Chaque zone conductrice de l'électrode peut être formée à la jonction entre la première partie isolante et un flanc en queue d'aronde de la seconde partie isolante. Cette forme en queue d'aronde permet un bon guidage de l'électrode dans l'alvéole d'un disque lors du déplacement le l'électrode le long de l'alvéole.

L'invention concerne également une installation de cassage d'angle sur une pièce métallique, caractérisée en ce qu'elle comprend :
- une cuve de réception de la pièce prévue pour être remplie d'une solution électrolytique de manière à immerger au moins l'angle à usiner, et
- des moyens de support de l'électrode décrite précédemment et de positionnement de la zone conductrice de l'électrode en immersion et en regard de l'angle à casser à une distance déterminée de cet angle, afin de réaliser le cassage d'angle par usinage électrochimique.

Au lieu d'être fait manuellement, le cassage d'angle selon l'invention est réalisé par usinage électrochimique avec des moyens dédiés de support et de positionnement qui permettent de garantir que la zone conductrice de l'électrode est positionnée en regard de l'angle à casser. De cette manière, il est possible de réaliser un cassage d'angle indépendamment de l'habilité de l'opérateur et de façon reproductible. De plus, les risques de dommages collatéraux sont éliminés.

Selon une autre caractéristique de l'invention, les moyens de support et de positionnement comprennent un portique déplaçable dans trois directions perpendiculaires par rapport à la cuve, de manière à permettre un déplacement dans les trois directions de l'espace de l'électrode et permettre un positionnement précis de la zone conductrice en regard de l'angle à casser.

Dans une réalisation préférée de l'invention, le portique comprend également des moyens de contrôle non destructif du cassage d'angle réalisé sur la pièce, de manière à effectuer ce contrôle immédiatement après la phase d'usinage électrochimique, ce qui permet de réduire beaucoup la durée globale du cassage d'angle. Ces moyens de contrôle non destructif peuvent consister par exemple en des moyens de contrôle optique ou des moyens de contrôle par ultrasons.

Dans le cas de moyens de contrôle optique, ces derniers comprennent un générateur émettant un faisceau laser dirigé vers la zone usinée de la pièce et une caméra de prise d'images de la zone usinée, reliée à des moyens de traitement de l'information pour l'interprétation des images prises par la caméra. Cette interprétation des images consiste essentiellement à déterminer la valeur du rayon de courbure de la zone usinée pour en déduire si l'opération de cassage d'angle a été correctement réalisée.

Dans une réalisation pratique de l'invention, la zone conductrice de l'électrode est en graphite et les parties isolantes de l'électrode sont en résine polymère. La zone conductrice de l'électrode est alimentée en courant continu ayant une densité de courant comprise entre 10 et 100 A/cm² et de préférence entre 50 et 60 A/cm².

Avantageusement, la pièce est montée sur un support déplaçable en hauteur, par exemple au moyen de vérins, par rapport à la cuve contenant la solution électrolytique, afin de sortir la zone usinée de la solution électrolytique lorsque l'on souhaite réaliser un contrôle optique de cette zone.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en perspective d'un disque de rotor dans une turbomachine ;
- la figure 2 est une représentation schématique en coupe d'un orifice d'une bride du disque de la figure 1,
- la figure 3 est une représentation de l'installation selon l'invention,
- les figures 4 et 5 sont des vues schématiques en perspective de deux électrodes utilisables dans l'installation selon l'invention.

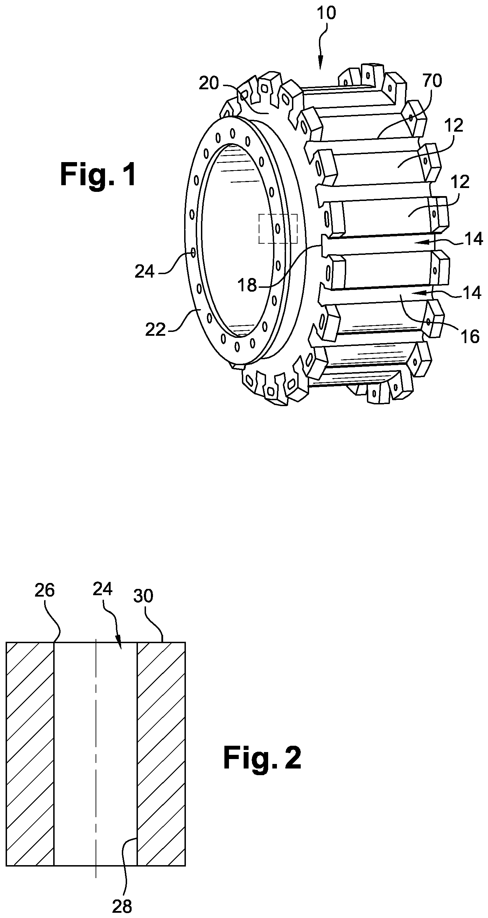

On se réfère tout d'abord à la figure 1 qui représente un disque 10 de rotor dans une turbomachine, comprenant en périphérie externe des nervures 12 disposées en alternance avec des alvéoles 14 destinés à recevoir des pieds d'aube du type en queue d'aronde.

La surface de fond 16 de chaque alvéole 14 forme ainsi des arêtes à angle droit 18 avec les faces amont 20 et aval du disque 10. Lors de la réalisation des rainures 12 dans le disque 10, des bavures sont formées au niveau des arêtes précitées. Ces arêtes 18 doivent être usinées pour éliminer les bavures et éviter tout risque de blessure lors de la manipulation du disque 10 par un opérateur.

Le disque de rotor comprend également une bride 22 pourvue d'une pluralité d'orifices 24 régulièrement répartis autour de l'axe du disque et permettant la fixation du disque 10 sur une structure annexe. Chaque extrémité de l'orifice 24 comprend une arête 26 formée par l'intersection de la surface interne 28 de l'orifice 24 et de la surface 30 sur laquelle débouche l'orifice 24 (figure 2).

De façon courante, le cassage des angles formés par ces arêtes est réalisé manuellement par des opérateurs, ce qui ne permet pas d'obtenir une surface d'usinage uniforme et régulière et présente les inconvénients décrits plus haut.

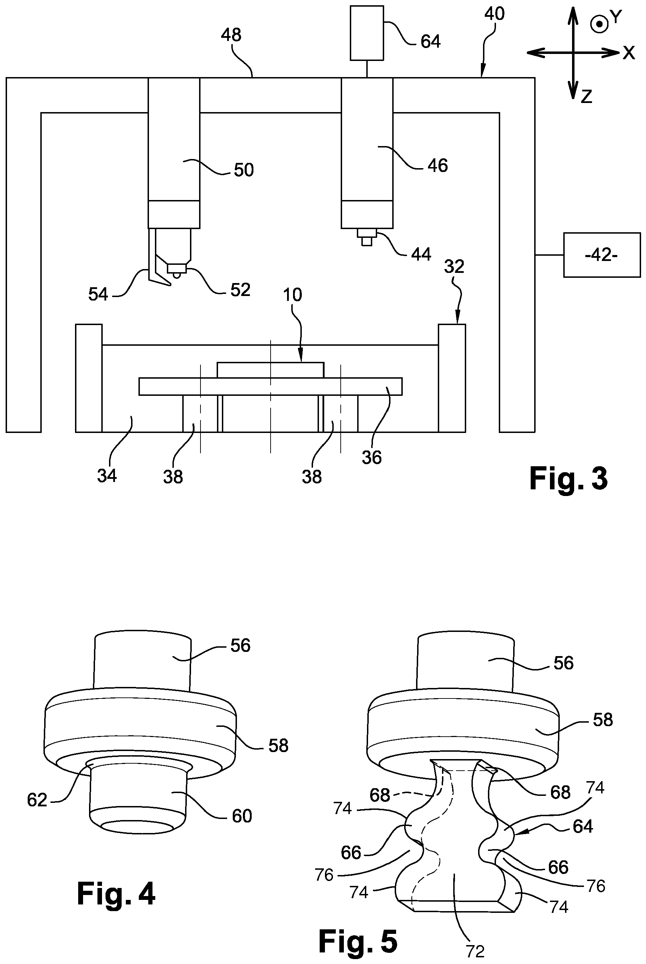

L'invention apporte une solution à ces problèmes ainsi qu'à ceux mentionnés précédemment en réalisant un cassage d'angle par usinage électrochimique au moyen de l'installation décrite en référence à la figure 3.

Cette installation comprend une cuve 32 remplie d'une solution électrolytique 34 et à l'intérieur de laquelle est placé un support 36 sur lequel est monté le disque 10 de manière à ce que les orifices 24 soient sensiblement verticaux ou alignés avec une perpendiculaire au fond de la cuve. Le support est déplaçable au moyen de vérins 38 permettant de sortir le disque 10 de la solution électrolytique 34 dans laquelle il est immergé.

L'installation comprend également des moyens de support et de positionnement d'une électrode d'usinage électrochimique formés par un portique 40 agencé au dessus de la cuve 32. Ce portique 40 est déplaçable selon trois directions perpendiculaires X, Y et Z et son déplacement est contrôlé par des moyens de commande 42. Une électrode 44 d'usinage électrochimique est portée par un premier support 46 qui est solidaire d'un montant transverse 48 du portique 40 et qui est s'étend en direction de la cuve 32.

Le portique 40 comprend également un deuxième support 50 s'étendant en direction de la cuve 32 et portant des moyens de contrôle optique 52 comportant un générateur laser et une caméra de prise d'images reliés à des moyens de traitement de l'information. Ce second support 50 comporte également un conduit 54 d'amenée d'air sous pression.

Comme représenté aux figures 4 et 5, l'électrode d'usinage 44 comprend une première partie filetée 56 venant se visser sur une partie filetée correspondante du premier support 46. L'électrode 44 comprend une surépaisseur annulaire isolante 58 séparant la partie filetée 56 d'une seconde partie isolante 60, 64.

Dans une première réalisation de l'électrode selon l'invention, l'électrode comprend une zone conductrice 62 de forme annulaire concave formée à la jonction entre la surépaisseur annulaire 58 et la seconde partie isolante 58 de forme cylindrique (figure 4).

L'électrode est reliée à une source de courant continu 64 (figure 3).

L'usinage et le contrôle optique sont réalisés de la manière suivante : l'électrode est approchée du disque de manière à ce que la zone conductrice 62 soit positionnée en regard de l'arête 26 à usiner, la seconde partie cylindrique 60 venant s'insérer dans l'orifice 24 pour le centrage de l'électrode 44 par rapport à l'orifice 24 de manière à assurer un positionnement de la zone conductrice 62 à une distance prédéterminée constante circonférentiellement par rapport à l'arête 26. On applique ensuite un courant électrique à la zone conductrice 62 afin de réaliser le cassage d'angle. L'électrode 44 est éloignée de la zone usinée et les vérins 38 déplacent la pièce 10 en hauteur de manière à faire émerger la zone usinée. Dans une autre étape, le second support 50 est approché de la zone usinée et un flux d'air sous pression est appliqué au niveau de la zone usinée de manière à éliminer toutes les impuretés ou gouttes restantes de solution électrolytique. Un faisceau laser est dirigé vers la zone usinée de la pièce 10 et la caméra prend plusieurs images de cette zone. Les moyens de traitement de l'information réalisent ensuite une interprétation des images pour évaluer le rayon de courbure de la zone usinée et vérifier si le cassage d'angle est correct.

Dans une autre réalisation représentée en figure 5, la deuxième partie isolante 64 comporte deux flancs 66 en queue d'aronde similaires à ceux d'un pied d'aube destiné à être monté dans un alvéole 14 du disque 10 de turbomachine. Les flancs 66 en queue d'aronde sont reliés l'un à l'autre par l'intermédiaire de parois planes parallèles 72 de l'électrode 44 et sont symétriques l'un de l'autre par rapport à un plan médian perpendiculaire aux parois planes. Chaque flanc 66 en queue d'aronde comprend deux parties pleines 74 et une partie creuse 76 agencée entre les deux parties pleines 74. Les parties pleines 74 et la partie creuse 76 sont destinées à coopérer avec des parties creuses et une partie pleine correspondantes d'une alvéole du disque 10, respectivement.

L'électrode comprend deux zones conductrices 68 incurvées concaves s'étendant rectilignement et parallèlement l'une à l'autre. Ces deux zones conductrices sont formées à la jonction entre la surépaisseur annulaire et les flancs 66 en queue d'aronde.

La forme de la seconde partie isolante 64 de l'électrode 44 et celle des zones conductrices 68 permettent de réaliser un usinage de l'angle formé au niveau de l'arête 70 joignant une nervure 12 et un alvéole 14 contigus. L'usinage de ce type d'arête s'effectue par déplacement de l'électrode de long de l'alvéole du disque et la seconde partie isolante 64 assure le positionnement correct de l'électrode 44 dans l'alvéole 14 du disque 10.

Dans une réalisation pratique de l'invention, la ou les zones conductrices 62, 68 de l'électrode 44 sont en graphite et les parties isolantes 60, 64 de l'électrode 44 sont en résine polymère. La solution électrolytique 34 est par exemple une solution de chlorure de sodium ou de nitrate de sodium.

La ou les zones conductrices 62, 68 de l'électrode 44 sont alimentées en courant continu dont la densité de courant est comprise entre 10 et 100 A/cm² et préférentiellement entre 50 et 60 A/cm².

L'installation selon l'invention permet de réduire de manière conséquente le temps nécessaire à la phase d'usinage et de contrôle optique. En effet, dans la technique antérieure, les phases d'usinage et de contrôle sur un disque de turbomachine comportant 70 trous nécessitaient environ 2 heures alors qu'avec l'installation selon l'invention ce temps est d'environ une dizaine de minutes.

Le présent document concerne également des moyens de contrôle non destructif autres que des moyens de contrôle optique tels que par exemple des moyens de contrôle par ultrasons de la zone de cassage d'angle. Dans ce cas, le support 52 est adapté pour recevoir au moins un transducteur ultrasonore relié à un générateur d'impulsions et à des moyens de traitement de l'information.

## Revendications

1. Electrode pour le cassage d'angle d'une pièce métallique par usinage électrochimique, comprenant au moins une zone conductrice (62, 68) destinée à être agencée en regard d'un angle à casser de la pièce, **caractérisée en ce que** la zone conductrice (62, 68) a une forme complémentaire de celle du cassage d'angle à réaliser et est agencée entre une première partie (58) formant une surépaisseur isolante et une seconde partie (60, 64) isolante de positionnement de la zone conductrice en regard de l'angle à casser, l'électrode comprenant en outre deux zones (68) incurvées concaves s'étendant de manière rectiligne et parallèlement l'une à l'autre, les concavités des zones incurvées (68) étant orientées selon une même direction et dans des sens opposés, chaque zone conductrice (68) étant formée à la jonction entre la première partie isolante (58) et un flanc en queue d'aronde de la seconde partie isolante (64).

2. Electrode selon la revendication 1, **caractérisée en ce que** la zone conductrice (62, 68) de l'électrode a une section incurvée concave.

3. Electrode selon la revendication 1 ou 2, **caractérisée en ce que** la première partie isolante (58) à une forme annulaire.

4. Electrode selon l'une des revendications 1 à 3, **caractérisée en ce que** la zone conductrice (62) de l'électrode (44) a une forme annulaire incurvée concave et s'étend entre la surépaisseur (58) isolante et la seconde partie (60) isolante ayant une forme cylindrique.

5. Installation de cassage d'angle sur une pièce métallique, **caractérisée en ce qu'**elle comprend :
- une électrode selon l'une des revendications précédentes,
- une cuve (32) de réception de la pièce (10), prévue pour être remplie d'une solution électrolytique (34) de manière à immerger au moins l'angle à usiner, et
- des moyens de support de l'électrode et de positionnement de la zone conductrice (62, 68) de l'électrode (44) en immersion et en regard de l'angle à casser à une distance déterminée de cet angle, afin de réaliser le cassage d'angle par usinage électrochimique

6. Installation selon la revendication 5, **caractérisée en ce que** les moyens de support et de positionnement comprennent un portique (40) déplaçable dans trois directions perpendiculaires par rapport à la cuve (32).

7. Installation selon la revendication 5 ou 6, **caractérisée en ce que** le portique (40) comprend des moyens de contrôle non destructif (52) du cassage d'angle réalisé sur la pièce (10).

8. Installation selon la revendication 7, **caractérisée en ce que** les moyens de contrôle non destructif comprennent des moyens de contrôle optique (52) comportant un générateur émettant un faisceau laser dirigé vers la zone usinée de la pièce et une caméra de prise d'images de la zone usinée, reliée à des moyens de traitement de l'information pour l'interprétation des images prises par la caméra.

9. Installation selon l'une des revendications 5 à 8, **caractérisée en ce que** la zone conductrice (62, 68) de l'électrode est en graphite.

10. Installation selon l'une des revendications 5 à 9, **caractérisée en ce que** les parties isolantes (60, 64) de l'électrode sont en résine polymère.

11. Installation selon l'une des revendications 5 à 10, **caractérisée en ce que** la zone conductrice (62, 68) de l'électrode est alimentée en courant continu ayant une densité de courant comprise entre 10 et 100 A/cm² et de préférence entre 50 et 60 A/cm².

12. Installation selon l'une des revendications 5 à 11, **caractérisée en ce qu'**elle comprend un support (36) destiné à recevoir une pièce (10) et déplaçable en hauteur, par exemple au moyen de vérins (38), par rapport à la cuve (32) contenant la solution électrolytique (34).

## Patentansprüche

1. Elektrode zum Brechen der Kanten eines metallischen Werkstücks durch elektrochemische Bearbeitung, enthaltend zumindest einen leitfähigen Bereich (62, 68), der dazu bestimmt ist, einer zu brechenden Kante des Werkstücks gegenüberliegend angeordnet zu werden,
**dadurch gekennzeichnet, dass**
der leitfähige Bereich (62, 68) eine Form aufweist, die zu der der durchzuführenden Kantenbrechung komplementär ist, und zwischen einem ersten Abschnitt (58), der eine isolierende Überdicke bildet, und einem zweiten isolierenden Abschnitt (60, 64) zum Positionieren des leitfähigen Bereichs gegenüber der zu brechenden Kante angeordnet ist, wobei die Elektrode ferner zwei konkav gekrümmte Bereiche (68) aufweist, die sich geradlinig und parallel zueinander erstrecken, wobei die Konkavitäten der gekrümmten Bereiche (68) in der gleichen Richtung einander entgegengesetzt ausgerichtet sind, wobei jeder leitfähige Bereich (68) an der Verbindung zwischen dem ersten isolierenden Abschnitt (58) und einer schwalbenschwanzförmigen Flanke des zweiten isolierenden Abschnitts (64) ausgebildet ist.

2. Elektrode nach Anspruch 1,
**dadurch gekennzeichnet, dass**
der leitfähige Bereich (62, 68) der Elektrode einen konkav gekrümmten Querschnitt hat.

3. Elektrode nach Anspruch 1 oder 2,
**dadurch gekennzeichnet, dass**
der erste isolierende Abschnitt (58) eine Ringform hat.

4. Elektrode nach einem der Ansprüche 1 bis 3,
**dadurch gekennzeichnet, dass**
der leitfähige Bereich (62) der Elektrode (44) eine konkav gekrümmte Ringform hat und sich zwischen der isolierenden Überdicke (58) und dem zweiten isolierenden Abschnitt (60) mit zylindrischer Form erstreckt.

5. Anlage zum Brechen von Kanten an einem metallischen Werkstück, **dadurch gekennzeichnet, dass** sie enthält:
- eine Elektrode nach einem der vorstehenden Ansprüche,
- einen Behälter (32) zum Aufnehmen des Werkstücks (10), der dazu vorgesehen ist, mit einer Elektrolytlösung (34) so gefüllt zu werden, dass zumindest die zu bearbeitende Kante darin eintaucht, und
- Mittel zum Abstützen der Elektrode und zum Positionieren des leitfähigen Bereichs (62, 68) der Elektrode (44) in Eintauchstellung und gegenüber der zu brechenden Kante in einem bestimmten Abstand von dieser Kante, um das Brechen der Kante durch elektrochemische Bearbeitung durchzuführen.

6. Anlage nach Anspruch 5,
**dadurch gekennzeichnet, dass**
die Abstütz- und Positionierungsmittel einen Rahmen (40) enthalten, der in drei senkrecht zum Behälter (32) verlaufenden Richtungen verstellbar ist.

7. Anlage nach Anspruch 5 oder 6,
**dadurch gekennzeichnet, dass**
der Rahmen (40) Mittel (52) zur zerstörungsfreien Prüfung der am Werkstück (10) durchgeführten Kantenbrechung enthält.

8. Anlage nach Anspruch 7,
**dadurch gekennzeichnet, dass**
die Mittel zur zerstörungsfreien Prüfung optische Prüfmittel (52) enthalten, die einen Laserstrahlgenerator, der einen auf den bearbeiteten Bereich des Werkstücks gerichteten Laserstrahl erzeugt, und eine Kamera zur Aufnahme von Bildern des bearbeiteten Bereichs enthalten, die mit Mitteln zur Informationsverarbeitung verbunden ist, um die von der Kamera aufgenommenen Bilder auszuwerten.

9. Anlage nach einem der Ansprüche 5 bis 8,
**dadurch gekennzeichnet, dass**
der leitfähige Bereich (62, 68) der Elektrode aus Graphit besteht.

10. Anlage nach einem der Ansprüche 5 bis 9,
**dadurch gekennzeichnet, dass**
die isolierenden Abschnitte (60, 64) der Elektrode aus Polymerharz bestehen.

11. Anlage nach einem der Ansprüche 5 bis 10,
**dadurch gekennzeichnet, dass**
der leitfähige Bereich (62, 68) der Elektrode mit Gleichstrom mit einer Stromdichte zwischen 10 und 100 A/cm², vorzugsweise zwischen 50 und 60 A/cm², versorgt wird.

12. Anlage nach einem der Ansprüche 5 bis 11,
**dadurch gekennzeichnet, dass**
sie einen Träger (36) enthält, der zur Aufnahme eines Werkstücks (10) bestimmt ist und beispielsweise mittels Kraftzylinder (38) bezüglich des die Elektrolytlösung (34) enthaltenden Behälters (32) höhenverstellbar ist.

## Claims

1. An electrode for breaking an edge of a metal part by electrochemical machining, the electrode comprising at least one conductive zone (62, 68) designed to be arranged facing an edge of the part that is to be broken, the electrode being **characterized in that** the conductive zone (62, 68) is of a shape that is complementary to the shape of the broken edge to be produced and is arranged between a first portion (58) forming an insulating extra thickness and an insulating second portion (60, 64) for positioning the conductive zone so that it faces the edge to be broken, the electrode comprising at least two concave curved zones (68) extending in rectilinear and mutually parallel manner, the concave sides of the curved zones (68) facing in opposite directions along a common axis, each conductive zone (68) is formed at the junction between the insulating first portion (58) and a dovetailed flank of the insulating second portion (64).

2. An electrode according to claim 1, **characterized in that** the conductive zone (62, 68) of the electrode has a concave curved section.

3. An electrode according to claim 1 or 2, **characterized in that** the insulating first portion (58) is annular in shape.

4. An electrode according to any of claims 1 to 3, **characterized in that** the conductive zone (62) of the electrode (44) has a concave curved annular shape and extends between the insulating extra thickness (58) and the insulating second portion (60) of cylindrical shape.

5. An installation for breaking an edge on a metal part, the installation being **characterized in that** it comprises:
- an electrode as claimed according to any of preceding claims,
- a vessel (32) for receiving the part (10) and designed to be filled with an electrolytic solution (34) so as to immerse at least the edge that is to be machined; and
- support and positioning means for supporting the electrode and for positioning the conductive zone (62, 68) of the electrode (44) in immersion facing the edge to be broken and at a determined distance from the edge, so as to break the edge by electrochemical machining.

6. An installation according to claim 5, **characterized in that** the support and positioning means comprise a gantry (40) movable in three mutually perpendicular directions relative to the vessel (32).

7. An installation according to claim 5 or 6, **characterized in that** the gantry (40) has non-destructive testing means (52) for inspecting the edge broken on the part (10).

8. An installation according to claim 7, **characterized in that** the non-destructive testing means comprise optical testing means (52) comprising a generator emitting a laser beam directly towards the machined zone of the part and a camera for imaging the machined zone, the camera being connected to information processor means for interpreting images taken by the camera.

9. An installation according to claims 5 to 8, **characterized in that** the conductive zone (62, 68) of the electrode is made of graphite.

10. An installation according to claims 5 to 9, **characterized in that** the insulating portions (60, 64) of the electrode are made of polymer resin.

11. An installation according to claims 5 to 10, **characterized in that** the conductive zone (62, 68) of the electrode is fed with direct current at a current density lying in the range 10 A/cm² to 100 A/cm², and preferably in the range 50 A/cm² to 60 A/cm².

12. An installation according to claims 5 to 11, **characterized in that** the part (10) is mounted on a support (36) that is movable vertically, e.g. by means of cylinders (38), relative to the vessel (32) containing the electrolytic solution (34).
